# EUROPÄISCHE PATENTSCHRIFT

(11) **EP 2 771 927 B1**
(45) Veröffentlichungstag und Bekanntmachung des Hinweises auf die Patenterteilung: **21.10.2015**
(21) Anmeldenummer: 12714956.5
(22) Anmeldetag: 31.03.2012
(51) Int. Cl.: H01M 2/20, H01M 10/44, H02J 7/00

(54) **VERFAHREN ZUR DURCHFÜHRUNG EINES LADUNGSAUSGLEICHS UND ZUGEHÖRIGE BATTERIE**
METHOD FOR CARRYING OUT CHARGE COMPENSATION AND ASSOCIATED BATTERY
PROCÉDÉ PERMETTANT D'EFFECTUER UN ÉQUILIBRAGE DE CHARGE ET BATTERIE ASSOCIÉE

(30) Priorität: 26.10.2011 DE 102011116951
(43) Veröffentlichungstag der Anmeldung: 03.09.2014
(73) Patentinhaber: Audi AG, 85045 Ingolstadt (DE)
(72) Erfinder: VERGOSSEN, David, 85049 Ingolstadt (DE)
(74) Vertreter: Herbst, Matthias Heinz
(86) Internationale Anmeldenummer: PCT/EP2012/001433
(87) Internationale Veröffentlichungsnummer: WO 2013/060393

(56) Entgegenhaltungen:
- DE-A1-102008 005 208
- US-A1- 2011 121 645

## Beschreibung

Die Erfindung betrifft ein Verfahren zur Durchführung eines Ladungsausgleichs zwischen Batteriezellen einer Batterie, bei dem wenigstens zwei Batteriezellen temporär parallel geschaltet werden.

Bei Batteriezellen einer Batterie kann häufig bei fortschreitender Alterung der Effekt bemerkt werden, dass einzelne Batteriezellen unterschiedliche Eigenschaften aufweisen. Beispielsweise kann die Kapazität oder die durch einen Aufladevorgang erreichte Spannung gewissen Schwankungen unterliegen. Es ist jedoch wünschenswert, dass der Ladezustand einzelner Batteriezellen einer Batterie möglichst homogen bzw. gleich ist. Daher sind bereits verschiedene Ladungsausgleichssysteme vorgeschlagen worden, um einen Ladungsausgleich zwischen Batteriezellen einer Batterie durchzuführen.

Bei einem bekannten Ladungsausgleichssystem werden Batteriezellen mit höherem Ladezustand einer Serienschaltung von Batteriezellen gezielt entladen, bis alle Batteriezellen denselben Ladezustand besitzen. Die entnommene Energie wird dabei in Wärmeenergie umgewandelt und an die Umwelt abgegeben. Ein derartiges Verfahren wird als passives Ladungsausgleichssystem bezeichnet.

Bei einem anderen bekannten Ladungsausgleichssystem werden stärkere Batteriezellen, die einen höheren Ladezustand aufweisen, entladen, deren Energie wird in einem Zwischenspeicher gespeichert. Beispiele für einen derartigen Zwischenspeicher sind eine Kapazität oder eine Induktivität. Die in diesem Zwischenspeicher gespeicherte Energie wird dann in die Batteriezellen mit niedrigerem Ladezustand entladen. Das den Zwischenspeicher aufweisende System wird als aktives Ladungsausgleichssystem bezeichnet. In einem derartigen System geht weniger Energie verloren als bei dem oben erwähnten passiven Ladungsausgleichssystem. Allerdings wird es bei dem passiven Ladungsausgleichssystem als nachteilig angesehen, dass Energie in Wärme umgewandelt wird und der Batterie nach der Umwandlung nicht mehr zur Verfügung steht. Andererseits ist bei einem aktiven Ladungsausgleichssystem eine aufwendige Steuerung und Schaltungstechnik erforderlich. Zudem erfolgt der Ladungsausgleich der beiden Systeme vergleichsweise langsam.

Aus der DE 10 2010 011 277 A1 ist ein Batteriesystem und ein Verfahren zum Ändern des Ladungszustands eines Batteriesystems bekannt. Dieses Batteriesystem umfasst zwei Zellen, die in Serie geschaltet sind, zwischen denen durch einen Schaltvorgang ein Spannungsausgleich über einen Ladungstransportpfad bewirkt werden kann. Es handelt sich um ein induktives Verfahren mit einem Transformator, wodurch sich eine komplizierte Schaltung ergibt.

Das Dokument DE 10 2008 005 208 A1 offenbart ein Verfahren zur Durchführung eines Ladungsausgleichs zwischen Batteriezellen einer Batterie, bei dem in Serie geschaltete Batteriezellen mittels einer Steuerung und durch Schalter von einer Normalkonfiguration in eine Ausgleichskonfiguration gebracht werden, wobei die Ausgleichskonfiguration eine Parallelschaltung umfasst. Lastschalter verbinden die Batterien mit dem Ausgleichsschaltkreis. Ein Lastschalter ist in der Lage, zwischen einem Lastanschluss und einem Ausgleichsanschluss hin- und herzuschalten. Die Batterien werden daher vom Stromnetz abgekoppelt und anschließend wieder mit dem Stromnetz verbunden.

Das Dokument US 2011/121645 A1 offenbart ein Verfahren, bei dem eine Batterie in eine Mehrzahl von Modulen und Zellen aufgeteilt wird. Ein Ladungsausgleichsverfahren wird sequentiell durchgeführt und erfolgt zwischen Einzelzellen sowie zwischen benachbarten Zellmodulen. Dieses Dokument offenbart eine Schaltungsanordnung, die eine Teilgruppe mit einer Steuerungseinrichtung verbindet. Ein Ladungsausgleich erfolgt durch eine entsprechende Schaltung.

Der Erfindung liegt die Aufgabe zugrunde, ein Verfahren zur Durchführung eines Ladungsausgleichs anzugeben, das während des Betriebs der Batterie durchgeführt werden kann.

Zur Lösung dieser Aufgabe ist ein Verfahren mit den Verfahrensschritten gemäß Patentanspruch 1 vorgesehen.

Der Erfindung liegt die Idee zugrunde, dass ein Ladungsausgleich bei einer Batterie sogar während des Betriebs durchgeführt werden kann, indem die Batteriezellen der Batterie in wenigstens zwei Teilgruppen aufgeteilt werden und ein Ladungsausgleich zunächst bei einer ersten Teilgruppe durchgeführt wird. Währenddessen wird die erste Teilgruppe von dem Stromnetz, beispielsweise dem Bordnetz eines Kraftfahrzeugs, abgekoppelt. Nach dem Ladungsausgleich wird die erste Teilgruppe wieder mit dem Stromnetz verbunden, anschließend wird eine zweite Teilgruppe von dem Bordnetz abgekoppelt, bei dieser zweiten Teilgruppe wird ein Ladungsausgleich durchgeführt, anschließend wird die zweite Teilgruppe wieder mit dem Stromnetz verbunden.

Das erfindungsgemäße Verfahren zeichnet sich dadurch aus, dass es mit einem geringen Schaltungsaufwand verwirklicht werden kann, es sind lediglich Schalter erforderlich, um die Batteriezellen parallel miteinander zu verschalten, der Ladungsausgleich erfolgt anschließend selbsttätig.

Es liegt auch im Rahmen der Erfindung, dass die Batteriezellen in mehr als zwei Teilgruppen geteilt werden und der Ladungsausgleich durch Abkoppeln vom Stromnetz, Parallelschalten, Aufheben der Parallelschaltung und Koppeln mit dem Stromnetz für jede Teilgruppe sequentiell durchgeführt wird. Das Vorsehen von mehr als zwei Teilgruppen weist den Vorteil auf, dass die Kapazität der Batterie beim Abkoppeln einer Teilgruppe weniger stark verringert wird.

Eine besonders homogene Ladungsverteilung kann mit dem erfindungsgemäßen Verfahren erzielt werden, indem nach der Durchführung des Ladungsausgleichs für die Teilgruppen der Batteriezellen die Teilgruppen parallel geschaltet werden, um einen Ladungsausgleich zwischen den Teilgruppen durchzuführen. Auf diese Weise wird ein automatischer, implizierter Ladungsausgleich realisiert.

Die Erfindung sieht vor, dass eine Teilgruppe von seriell geschalteten Batteriezellen mittels eines Leistungsschalters von dem Stromnetz abgekoppelt wird. Diese Leistungsschalter sind in der Lage, die vergleichsweise hohen Ströme zu schalten, um die Teilgruppe der seriell geschalteten Batteriezellen mit dem Stromnetz zu koppeln oder davon abzukoppeln.

Im Rahmen des erfindungsgemäßen Verfahrens ist vorgesehen, dass jeder Batteriezelle ein erster Schalter zugeordnet wird, um die serielle Verschaltung zu unterbrechen, sowie ein zweiter Schalter, um anschließend die Batteriezellen parallel zu schalten. Beide Schalter werden somit in einer bestimmten Reihenfolge betätigt, um zunächst die serielle Verschaltung zu unterbrechen und in einem zweiten Schritt eine Parallelschaltung zu erzeugen. Durch die parallele Verschaltung wird automatisch der Ladungsausgleich ausgelöst, anschließend werden die Schalter wieder in umgekehrter Reihenfolge betätigt, d. h. zunächst wird der zweite Schalter betätigt, um die Parallelschaltung aufzuheben, danach wird der erste Schalter betätigt, um die serielle Verschaltung wieder herzustellen.

Um den Ladungsausgleich durch das erfindungsgemäße Verfahren besser steuern zu können, kann es vorgesehen sein, dass die Leistungsschalter und/oder die ersten und zweiten Schalter mittels einer Steuerungseinrichtung betätigt werden. Diese Steuerungseinrichtung steuert somit den Ladungsausgleich der Teilgruppen. Beispielsweise kann die Steuerungseinrichtung einen günstigen Zeitpunkt für den Ladungsausgleich erkennen, weiterhin ist sie in der Lage, eine ungünstige, d. h. ungleiche Ladungsverteilung der Batteriezellen zu erkennen, die einen Ladungsausgleich erforderlich macht.

Eine besonders störungsfreie Durchführung des Ladungsausgleichs wird ermöglicht, wenn für die Leistungsschalter und/oder die ersten und zweiten Schalter mechanische Schalter, insbesondere Relais, oder elektronische Schalter, insbesondere Feldeffekttransistoren verwendet werden. Mechanische Schalter und elektronische Schalter sind gleichermaßen in der Lage, die erforderliche Verschaltung der Batteriezellen zu erzeugen, um den Ladungsausgleich auszulösen.

Bei dem erfindungsgemäßen Verfahren kann es auch vorgesehen sein, dass der Ladungsausgleich erst dann durchgeführt wird, wenn die Batterie eine festgelegte Mindesttemperatur erreicht hat. Die Mindesttemperatur wird dabei so festgelegt, dass die verbleibende Teilgruppe oder die verbleibenden Teilgruppen der Batterie eine ausreichende Kapazität aufweisen, um das Stromnetz mit Strom zu versorgen.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: eine für das erfindungsgemäße Verfahren geeignete Batterie; und
- Fig. 2: eine detailliertere Ansicht der Batterie von Fig. 1.

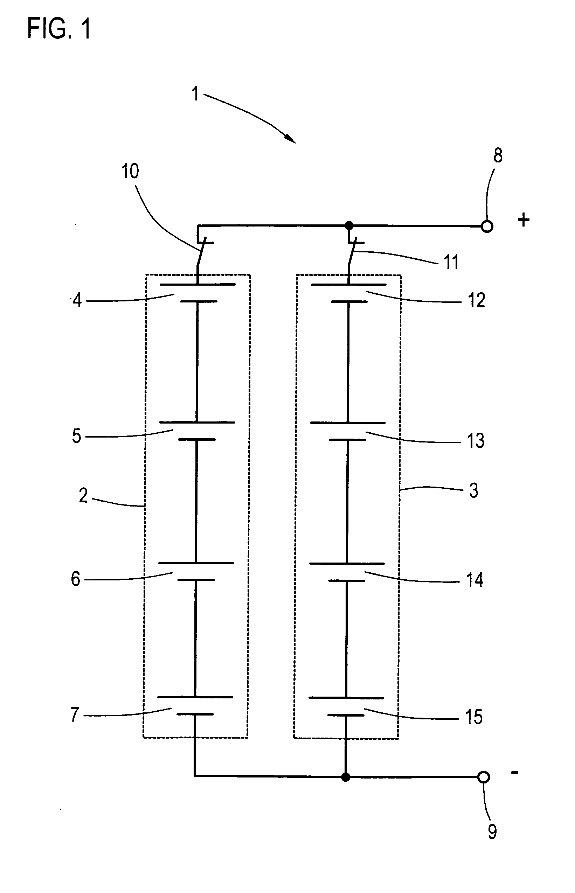

Fig. 1 zeigt eine Batterie 1, die eine Mehrzahl von Batteriezellen umfasst. Die Batteriezellen sind in zwei Strängen 2, 3 zusammengefasst, wobei jeder Strang 2, 3 mehrere in Reihe geschaltete Batteriezellen umfasst. Die Stränge 2, 3 sind jeweils durch eine gestrichelte Linie gekennzeichnet. Der Strang 2 umfasst beispielsweise die Batteriezellen 4, 5, 6, 7. Es sind auch andere Ausführungen denkbar, bei denen eine Batteriezelle aus mehreren parallel geschalteten einzelnen Batteriezellen besteht.

Einzelne Batteriezellen können unterschiedliche Eigenschaften aufweisen, bedingt durch Herstellungstoleranzen oder Alterungserscheinungen. Unterschiede zeigen sich beispielsweise bei der erreichten Spannung nach einem Aufladevorgang. Um einen Ladungsausgleich zwischen den Batteriezellen einer Batterie durchzuführen, werden wenigstens zwei Batteriezellen temporär parallel geschaltet. Zur Durchführung des Verfahrens werden die Batteriezellen in zwei Teilgruppen aufgeteilt. In dem dargestellten Ausführungsbeispiel entspricht der Strang 2 einer ersten Teilgruppe, der Strang 3 entspricht einer zweiten Teilgruppe. Im Rahmen des Verfahrens wird die erste Teilgruppe (Strang 2) von einem Stromnetz abgekoppelt. In diesem Fall handelt es sich bei dem Stromnetz um ein Bordnetz eines Kraftfahrzeugs, das mit Polen 8, 9 der Batterie 1 verbunden ist.

Der Strang 2 ist über einen Leistungsschalter 10 mit dem Stromnetz gekoppelt, der Strang 3 analog über einen Leistungsschalter 11. Durch Betätigen eines Leistungsschalters kann der entsprechende Strang 2, 3 mit dem Stromnetz gekoppelt oder davon abgekoppelt werden.

Um einen Ladungsausgleich zwischen den Batteriezellen der Batterie durchzuführen, wird der Strang 2 als erste Teilgruppe der Batteriezellen von dem Stromnetz abgekoppelt, indem der Leistungsschalter 10 geöffnet wird.

Anschließend werden die Batteriezellen 4, 5, 6, 7 der ersten Teilgruppe parallel geschaltet. In dem parallel geschalteten Zustand erfolgt automatisch ein Ausgleich der verschiedenen Potentiale. Anschließend wird die Parallelschaltung wieder aufgehoben und der Strang 2, der die erste Teilgruppe der Batteriezellen umfasst, wieder mit dem Stromnetz gekoppelt, indem der Leistungsschalter 10 geschlossen wird.

Anschließend wird derselbe Vorgang mit den Batteriezellen des Strangs 3 durchgeführt, der die zweite Teilgruppe der Batteriezellen enthält. Dementsprechend wird der Strang 3 durch Öffnen des Leistungsschalters 11 vom Stromnetz getrennt, die Batteriezellen 12, 13, 14, 15 werden parallel geschaltet, so dass ein Ladungsausgleich stattfindet. Anschließend wird die Parallelschaltung wieder aufgehoben und der Strang 3 wird durch Schließen des Leistungsschalters 11 wieder mit dem Stromnetz verbunden.

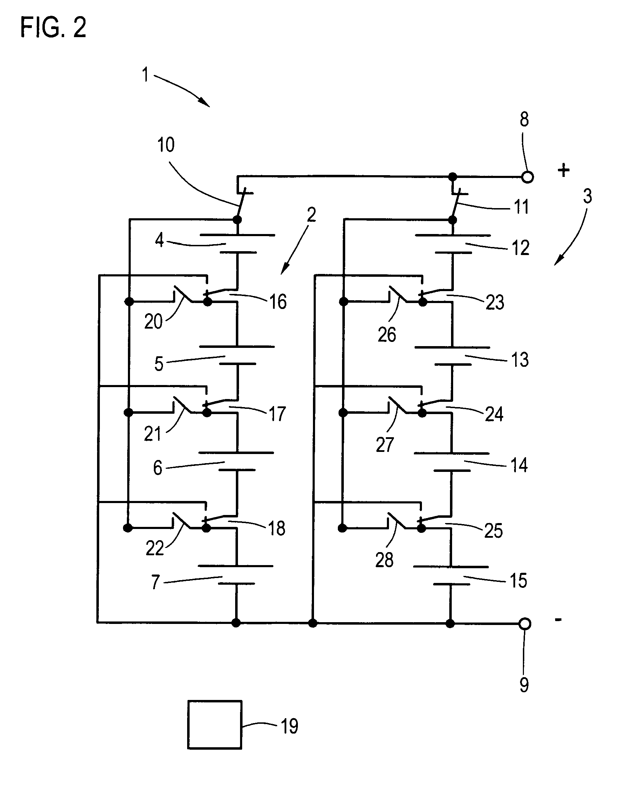

Fig. 2 ist eine detailliertere Ansicht der in Fig. 1 gezeigten Batterie 1, übereinstimmende Komponenten werden mit denselben Bezugszeichen wie in Fig. 1 bezeichnet.

Das Verfahren zur Durchführung eines Ladungsausgleichs wird unter Bezugnahme auf Fig. 2 im Detail beschrieben. Im Ausgangszustand sind die Leistungsschalter 10, 11 geschlossen. Um einen Ladungsausgleich durchzuführen wird der Leistungsschalter 10 geöffnet, wodurch die erste Teilgruppe, die die Batteriezellen 4, 5, 6, 7 umfasst, vom Stromnetz getrennt wird. Anschließend werden diese Batteriezellen 4, 5, 6, 7 parallel geschaltet. Dazu schaltet ein erster Schalter 16 um, wodurch die serielle Leitungsverbindung der Batteriezellen 4 und 5 unterbrochen wird. Analog schaltet ein Schalter 17 um, der die serielle Verbindung zwischen den Batteriezellen 5 und 6 öffnet, ebenso ein weiterer Schalter 18, der die serielle Verbindung der Batteriezellen 6 und 7 unterbricht. Die Schalter 16, 17, 18 bilden gemeinsam eine Gruppe der ersten Schalter, die Schaltvorgänge der Leistungsschalter 10, 11 und der Gruppe der ersten Schalter 16, 17, 18 werden von einer Steuerungseinrichtung 19 ausgelöst, die über nicht dargestellte Leitungsverbindungen mit den einzelnen Schaltern verbunden ist. Insbesondere steuert die Steuerungseinrichtung 19 die Reihenfolge der Schaltvorgänge, indem z. B. gewartet wird, bis die Gruppe der ersten Schalter 16,. 17, 18 sicher umgeschaltet hat, erst dann wird eine Gruppe zweiter Schalter 20, 21, 22 geschaltet. Der Schalter 20 bewirkt eine Parallelschaltung der Batteriezellen 4, 5, analog bewirkt der Schalter 21 eine Parallelschaltung der Batteriezellen 5, 6 und der Schalter 22 bewirkt eine Parallelschaltung der Batteriezellen 6, 7. Gemeinsam bilden die zweiten Schalter 20, 21, 22 die Gruppe der zweiten Schalter.

In dem parallel geschalteten Zustand gleichen die parallel geschalteten Batteriezellen 4, 5, 6, 7 ihre Ladezustände gegenseitig aneinander an, so dass alle Batteriezellen dieselbe Spannung aufweisen. Die Steuerungseinrichtung 19 wartet, bis eine bestimmte Zeit verstrichen ist, anschließend schalten die Schalter 20, 21, 22 der Gruppe der zweiten Schalter wieder zurück in den geöffneten Zustand. Die Wartezeit der Steuerungseinrichtung 19 wurde zuvor experimentell bestimmt.

Anschließend wartet die Steuerungseinrichtung 19, bis die Schalter 20, 21, 22 sicher zurückgeschaltet haben, im nächsten Schritt des Verfahrens schaltet die Steuerungseinrichtung 19 die Schalter 16, 17, 18 der ersten Gruppe der Schalter wieder zurück in die geschlossene Stellung. Anschließend wartet die Steuerungseinrichtung 19, bis die Schalter der ersten Gruppe sicher zurückgeschaltet haben, wodurch die Batteriezellen 4, 5, 6, 7 wieder seriell verschaltet werden. Anschließend wird durch die Steuerungseinrichtung 19 der Leistungsschalter 10 geschlossen, so dass der Strang 2 wieder mit dem Stromnetz verbunden wird.

Anschließend wird ein analoger Ladungsausgleich in dem Strang 3 durchgeführt. Dazu wird der Leistungsschalter 11 geöffnet, die Batteriezellen 12, 13, 14, 15 werden zueinander parallel geschaltet, indem Schalter 23, 24, 25 einer ersten Schaltergruppe geöffnet werden. Durch diese Schaltvorgänge wird die Serienschaltung der Batteriezellen 12, 13, 14, 15 aufgehoben. Nachdem ein festgelegter Zeitraum verstrichen ist, schaltet die Steuerungseinrichtung 19 eine Gruppe zweiter Schalter 26, 27, 28 in den geschlossenen Zustand, wodurch die Batteriezellen 12, 13, 14, 15 parallel zueinander geschaltet werden. In diesem Zustand gleichen die Batteriezellen des Strangs 3 ihre Ladezustände aneinander an, nach dem Verstreichen eines festgelegten Zeitraums werden von der Steuerungseinrichtung 19 die Schaltvorgänge in umgekehrter Reihenfolge durchgeführt. Dementsprechend werden die Schalter 26, 27, 28 der zweiten Gruppe geöffnet, die Schalter 23, 24, 25 der ersten Gruppe werden geschlossen und der Leistungsschalter 11 wird wieder geschlossen. Vor jedem Schaltvorgang wird gewartet, bis die vorhergehenden Schaltvorgänge abgeschlossen sind.

Wenn beide Stränge 2, 3 an das Bordnetz angeschlossen sind, gleichen sich die Ladezustände beider Stränge 2, 3 aneinander an, wodurch das Verfahren abgeschlossen wird.

In dem in den Fig. 1 und 2 dargestellten Ausführungsbeispiel sind die Leistungsschalter 10, 11 sowie die Schalter der ersten Gruppe und die Schalter der zweiten Gruppe als Relais, also als mechanische Schalter, ausgebildet. Bei anderen Ausführungsbeispielen können sämtliche Schalter als elektronische Schalter, insbesondere als Feldeffekttransistoren, ausgebildet sein.

Das beschriebene Verfahren eignet sich besonders gut für eine Batterie, die Bestandteil eines Bordnetzes eines Kraftfahrzeugs ist.

## Patentansprüche

1. Verfahren zur Durchführung eines Ladungsausgleichs zwischen Batteriezellen einer Batterie, bei dem wenigstens zwei Batteriezellen temporär parallel geschaltet werden, mit den folgenden Schritten:
- Aufteilen der Batteriezellen in wenigstens zwei Teilgruppen von seriell geschalteten Batteriezellen;
- Abkoppeln einer ersten Teilgruppe von einem Stromnetz mittels eines Leistungsschalters;
wobei jeder Batteriezelle ein erster Schalter zugeordnet wird, um die serielle Verschaltung zu unterbrechen, sowie ein zweiter Schalter, um anschließend die Batteriezellen parallel zu schalten;
- Parallelschalten der Batteriezellen der ersten Teilgruppe zur Durchführung des Ladungsausgleichs;
- Aufheben der Parallelschaltung und Koppeln der ersten Teilgruppe mit dem Stromnetz;
- Abkoppeln einer zweiten Teilgruppe von dem Stromnetz;
- Parallelschalten der Batteriezellen der zweiten Teilgruppe zur Durchführung des Ladungsausgleichs; und
- Aufheben der Parallelschaltung und Koppeln der zweiten Teilgruppe mit dem Stromnetz.

2. Verfahren zur Durchführung eines Ladungsausgleichs nach Anspruch 1,
**dadurch gekennzeichnet,**
**dass** die Batteriezellen in mehr als zwei Teilgruppen geteilt werden und der Ladungsausgleich durch Abkoppeln vom Stromnetz, Parallelschalten, Aufheben der Parallelschaltung und Koppeln mit dem Stromnetz für jede Teilgruppe sequentiell durchgeführt wird.

3. Verfahren zur Durchführung eines Ladungsausgleichs nach Anspruch 1 oder 2,
**dadurch gekennzeichnet,**
**dass** nach der Durchführung des Ladungsausgleichs für die Teilgruppen der Batteriezellen die Teilgruppen parallel geschaltet werden, um einen Ladungsausgleich zwischen den Teilgruppen durchzuführen.

4. Verfahren zur Durchführung eines Ladungsausgleichs nach einem der vorangehenden Ansprüche,
**dadurch gekennzeichnet,**
**dass** die Leistungsschalter und/oder die ersten und zweiten Schalter mittels einer Steuerungseinrichtung betätigt werden.

5. Verfahren zur Durchführung eines Ladungsausgleichs nach einem der vorangehenden Ansprüche,
**dadurch gekennzeichnet,**
**dass** für die Leistungsschalter und/oder die ersten und zweiten Schalter mechanische Schalter, insbesondere Relais, oder elektronische Schalter, insbesondere Feldeffekttransistoren verwendet werden.

6. Verfahren zur Durchführung eines Ladungsausgleichs nach einem der vorangehenden Ansprüche,
**dadurch gekennzeichnet,**
**dass** es erst durchgeführt wird, wenn die Batterie eine festgelegte Mindesttemperatur erreicht hat.

## Claims

1. Method for equalising the charge between battery cells of a battery, in which at least two battery cells are temporarily connected in parallel, said method comprising the following steps:
- dividing the battery cells into at least two subgroups of battery cells connected in series;
- disconnecting a first subgroup from a power grid by means of a circuit breaker;
wherein each battery cell is assigned both a first switch for breaking the series connection and a second switch for then connecting the battery cells in parallel;
- connecting the battery cells of the first subgroup in parallel in order to equalise the charge;
- removing the parallel connection and connecting the first subgroup to the power grid;
- disconnecting a second subgroup from the power grid;
- connecting the battery cells of the second subgroup in parallel in order to equalise the charge; and
- removing the parallel connection and connecting the second subgroup to the power grid.

2. Method for carrying out a charge equalisation according to claim 1,
**characterised in that**
the battery cells are split into more than two subgroups and the charge equalisation by means of disconnection from the power grid, connection in parallel, removal of the parallel connection, and connection to the power grid is carried out sequentially for each sub-group.

3. Method for carrying out a charge equalisation according to either claim 1 or claim 2,
**characterised in that**,
following the charge equalisation for the subgroups of battery cells, the subgroups are connected in parallel in order to equalise the charge between the subgroups.

4. Method for carrying out a charge equalisation according to any of the preceding claims,
**characterised in that**
the circuit breakers and/or the first and second switches are actuated by means of a control device.

5. Method for carrying out a charge equalisation according to any of the preceding claims,
**characterised in that**
mechanical switches, in particular relays, or electronic switches, in particular field effect transistors, are used for the circuit breakers and/or the first and second switches.

6. Method for carrying out a charge equalisation according to any of the preceding claims,
**characterised in that**
said method is not carried out until the battery has reached a pre-set minimum temperature.

## Revendications

1. Procédé servant à effectuer un équilibrage de charge entre des cellules de batterie d'une batterie, où au moins deux cellules de batterie sont branchées de manière temporaire en parallèle, comprenant les étapes suivantes consistant à :
- diviser les cellules de batterie en au moins deux groupes partiels de cellules de batterie montées en série ;
- découpler un premier groupe partiel du réseau d'alimentation électrique au moyen d'un disjoncteur ; où sont associés, à chaque cellule de batterie, un premier interrupteur afin de couper le branchement en série, ainsi qu'un deuxième interrupteur afin de monter en parallèle par la suite les cellules de batterie ;
- monter en parallèle les cellules de batterie du premier groupe partiel afin d'effectuer l'équilibrage de charge ;
- supprimer le montage en parallèle et coupler le premier groupe partiel au réseau d'alimentation électrique ;
- découpler un deuxième groupe partiel du réseau d'alimentation électrique ;
- monter en parallèle les cellules de batterie du deuxième groupe partiel afin d'effectuer l'équilibrage de charge ; et
- supprimer le montage en parallèle et coupler le deuxième groupe partiel au réseau d'alimentation électrique.

2. Procédé servant à effectuer un équilibrage de charge selon la revendication 1,
**caractérisé en ce**
**que** les cellules de batterie sont divisées en deux groupes partiels ou plus, et
**que** l'équilibrage de charge est effectué par séquence par le découplage du réseau d'alimentation électrique, par le branchement en parallèle, par la suppression du branchement en parallèle et par le couplage au réseau d'alimentation électrique pour chaque groupe partiel.

3. Procédé servant à effectuer un équilibrage de charge selon la revendication 1 ou 2,
**caractérisé en ce**
**que** les groupes partiels sont branchés en parallèle une fois l'équilibrage de charge pour les groupes partiels des cellules de batterie effectué afin d'effectuer un équilibrage de charge entre les groupes partiels.

4. Procédé servant à effectuer un équilibrage de charge selon l'une quelconque des revendications précédentes,
**caractérisé en ce**
**que** le disjoncteur et/ou les premiers et deuxièmes interrupteurs sont actionnés au moyen d'un dispositif de commande.

5. Procédé servant à effectuer un équilibrage de charge selon l'une quelconque des revendications précédentes,
**caractérisé en ce**
**que** des interrupteurs mécaniques, en particulier des relais, ou des interrupteurs électroniques, en particulier des transistors à effet de champ, sont utilisés pour les disjoncteurs et/ou les premiers et deuxièmes commutateurs.

6. Procédé servant à effectuer un équilibrage de charge selon l'une quelconque des revendications précédentes,
**caractérisé en ce**
**que** le procédé n'est effectué que lorsque la batterie a atteint une température minimale fixée.
